# EUROPÄISCHE PATENTSCHRIFT

(11) **EP 0 808 994 B1**
(45) Veröffentlichungstag und Bekanntmachung des Hinweises auf die Patenterteilung: **21.07.2004**
(21) Anmeldenummer: 97810168.1
(22) Anmeldetag: 20.03.1997
(51) Int. Cl.: F01K 23/10, F01K 21/04

(54) **Verfahren zum Betrieb einer Kombianlage**
Method of operating a combined power plant
Procédé de fonctionnement d'une centrale combinée

(30) Priorität: 22.04.1996 DE 19615911
(43) Veröffentlichungstag der Anmeldung: 26.11.1997
(73) Patentinhaber: ALSTOM Technology Ltd, 5400 Baden (CH)
(72) Erfinder: Frutschi, Hansulrich, 5223 Riniken (CH)

(56) Entgegenhaltungen:
- EP-A- 0 083 109
- EP-A- 0 304 827
- EP-A- 0 439 754
- EP-A- 0 676 532
- WO-A-96/07019
- PATENT ABSTRACTS OF JAPAN vol. 014, no. 235 (M-0975), 18. Mai 1990 (1990-05-18) & JP 02 061329 A (TOSHIBA CORP;OTHERS: 01), 1. März 1990 (1990-03-01)

## Beschreibung

### Technisches Gebiet

Die vorliegende Erfindung betrifft ein Verfahren zum Betrieb einer Kombianlage gemäss Oberbegriff des Anspruchs 1.

### Stand der Technik

Eine moderne Kombianlage nach Stand der Technik wird üblicherweise mit folgenden Regeleingriffen gefahren: Die vom Leistungs- oder Drehzahlregler anzusteuernden Regelorgane, nämlich Verdichterleitreiheverstellung, Ansaugluftvorwärmung und Dampfeinblasung mit einer Dampfmenge aus dem Abhitzedampferzeuger lösen thermodynamische Veränderungen des Kreislaufes, wie jene von Massenstrom und Druckverhältnis, aus. Diese Veränderungen verlangen ihrerseits eine Anpassung der Brennstoffmengen. Dies geschieht über entsprechende Regelorgane, welche eine Brennstoffzumessung auslösen. Bei Vorhandensein eines Zwischenkühlers im Verdichtersystem kann zur Optimierung der aerodynamischen Verhältnisse der Teilverdichter die Kühlwassermenge über eine Kühlwasserzumessung verändert werden.

So wirkt sich beispielsweise ein teilweises Zufahren der Verdichterleitreihen und/oder eine Vorwärmung der Ansaugluft in einer Abnahme des Kreislaufluftstromes aus, welche über das Schluckgesetz der Turbine eine Abnahme des Druckverhältnisses herbeiführt. Um nun einem Temperaturanstieg in den beiden Brennkammern zu verhindern, müssen die Brennstoffmengen reduziert werden. Dies geschieht zweckmässigerweise aufgrund der Verwendung der beiden gut und zuverlässig erfassbaren Parameter Turbinenaustrittstemperatur und dem Druck am Austritt des Verdichtersystems. Eine Direkterfassung der Heissgastemperaturen und der Austrittstemperatur der Hochdruckturbine wegen des dort herrschenden sehr hohen Temperaturniveaus sind aber an sich problematisch.

Umgekehrt müssen bei Weiteröffnung der Verdichterleitreihen die beiden Brennstoffmengen zu den Brennkammern vergrössert werden, was über demselben Regelmechanismus geschieht, wie zuvor. Die dadurch erzielte Leistungssteigerung basiert indessen auf einem erhöhten Brennkammer- und Turbinenmassenstrom, welche eine Anhebung des Druckverhältnisses mit sich bringt. Die dadurch zustandegekommene Senkung der niederdruckseitigen Turbinenaustrittstemperatur reduziert die durch den zunehmenden Massenstrom erhöhte Dampfproduktion nur marginal, so dass die Nutzleistung etwa proportional zum Anstieg der vom Verdichter geförderten Luftmenge wächst. Eine weitergehende Erhöhung der gefahrenen Leistung der Dampfturbine ist mithin nicht möglich.

EP 676 532 offenbart eine Kraftwerksanlage, bei der ein Hochdruck -Frischdampf, der in einem Abhitzedampferzeuger einer Gasturbogruppe bereitgestellt wird, in einer Dampfturbine teilentspannt wird. Der gesamte teilentspannte Dampfmassenstrom wird der Gasturbogruppe stromauf der Brennkammer zugeführt. Das so in der Brennkammer vorleigende Heissgas-Dampf-Gemisch wird auf eine Temperatur von 1310°C bis 1370°C erhitzt. Bei der hier offenbarten Kraftwerksanlage liegt immer ein Heissgas-Dampf-Gemisch vor, und der gesamte erzeugte Dampfmassenstrom strömt mit dem entspannten Heissgas aus dem Abgastraht der Gasturbogruppe ab.

JP 02 061 329 vermittelt die Lehre, an einer druckmässig geeigneten Stelle einer Dampfturbinegeregelt Dampf zu entnehmen und einer Brennkammer einer Gasturbine zuzuführen, gibt jedoch keinen Hinweisdarauf, wiei auf die Brennstoffmenge ein zu wirken sei.

### Darstellung der Erfindung

Hier will die Erfindung Abhilfe schaffen. Der Erfindung, wie sie in den Ansprüchen gekennzeichnet ist, liegt die Aufgabe zugrunde, bei einem Verfahren der eingangs genannten Art eine Regelmethode vorzuschlagen, welche eine Erhöhung der gefahrenen Leistung auslöst, dies unter gleichzeitiger Maximierung des Wirkungsgrades und Minimierung Schadstoff-Emissionen.

Durch eine Entnahme einer bestimmten Dampfmenge an geeigneter Druckstelle aus der Dampfturbine und Einblasung derselben an geeigneter Stelle in den Gasturbinenprozess erhöht sich die Gasturbinenleistung wesentlich mehr, als die Dampfturbinenleistung abnimmt. Insgesamt lässt sich so eine Leistungserhöhung von 10-15% erreichen.

Der einzublasende Dampf hat stromauf des Brenners der Hochdruckbrennkammer zu erfolgen, wobei eine Beimischung desselben zum Brennstoff thermodynamisch gleichwertig ist. Da der eingeblasene Dampf auf das Temperaturniveau des in dieser Brennkammer bereitgestellten Heissgases gebracht wird, was natürlich eine zusätzliche Brennstoffmenge bedingt, wird im Abhitzedampferzeuger zusätzlich Dampf produziert. Zwar ist es richtig, dass diese Leistungsteigerung eine leichte Abnahme des Wirkungsgrades der Kombianlage mit sich bringt, da im Kamin höherwertige latente Wärme verloren geht, als dies im Kondensator der Dampfturbine der Fall wäre. Indessen, da der in die Gasturbine einzublasende Dampf der Dampfturbine an druckmässig passender Stelle entnommen wird, reduziert er anteilmässig nicht die ganze Dampfturbinenleistung.

Die erwähnte leichte Abnahme des Wirkungsgrades kann wie folgt wettgemacht werden:
Die Einführung eines Zwischenkühlers, durch Unterteilung des Verdichters in mindestens zwei Teilverdichter, erhöht die Leistung der Gasturbine und damit auch jene der Kombianalage. Während der Wirkungsgrad der Gasturbine bei günstig gewähltem Kreislaufdruckverhältnis und bei druckmässig günstiger Aufteilung der beiden Teildruckverhältnisse der Verdichterteile ansteigt, nimmt dieser bezogen auf die Kombischaltung leicht ab. Dies deshalb, weil der Brennstoffenergieanteil, welcher im Zwischenkühler verloren geht, im Abhitzedampferzeuger für die Dampfproduktion fehlt. Dieser Wirkungsgradabfall kann allerdings dadurch aufgehalten werden, indem die Kühlwassermenge im Zwischenkühler möglich klein gehalten wird, und so heisses Druckwasser entsteht, welches in einer Ausdampfkaskade teilweise in Dampf umgewandelt wird, welcher dann in die Dampfturbine geleitet wird und dort Arbeit leistet.

Durch die Veränderung der Kühlwassermenge lässt sich demnach die Eintrittstemperatur in den zweiten Verdichterteil beeinflussen, so dass bei vom Nennpunkt abweichenden Betriebspunkten der beiden Verdichterteile korrigiert werden können, so dass ihre Wirkungsgrade maximiert werden, was sich wiederum auf den Gesamtwirkungsgrad der Kombianlage niederschlägt.

Vorteilhafte und zweckmässige Weiterbildungen der erfindungsgemässen Aufgabenlösung sind in den weiteren Ansprüchen gekennzeichnet.

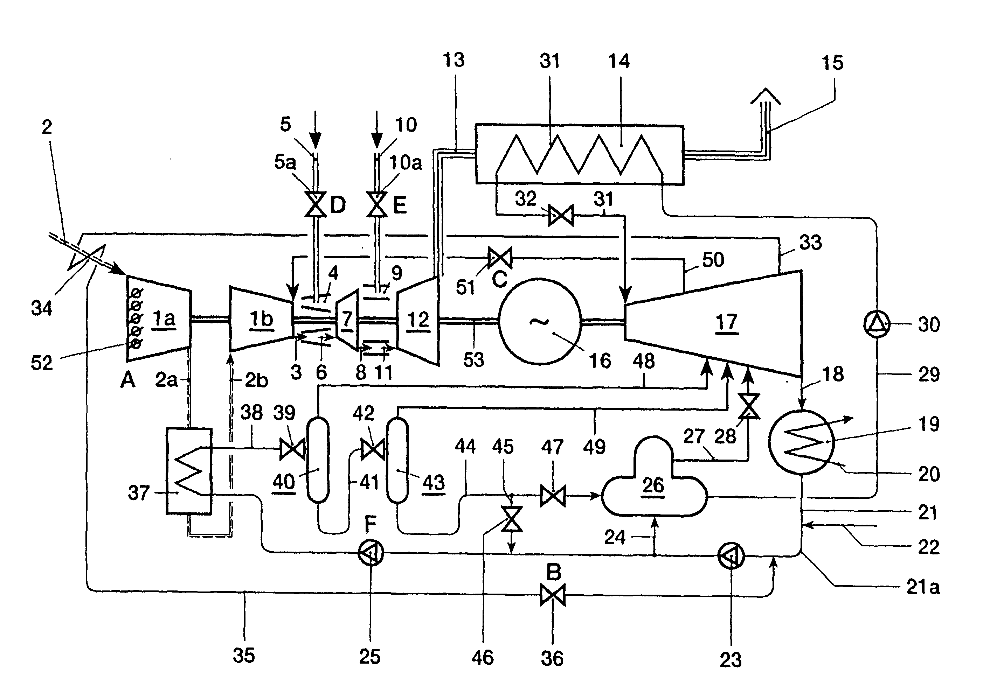

Im folgenden wird anhand der Zeichnung ein Ausführungsbeispiel der Erfindung dargestellt und näher erläutert. Alle für das unmittelbare Verständnis der Erfindung nicht erforderlichen Elemente sind fortgelassen. Die Strömungsrichtung der Medien ist mit Pfeilen angegeben.

### Kurze Beschreibung der Zeichnung

Die einzige Figur zeigt eine Schaltung einer Kombianlage, deren Gasturbogruppe auf einer sequentieller Verbrennung aufgebaut ist.

### Wege zur Ausführung der Erfindung, gewerbliche Verwendbarkeit

Die Figur zeigt eine Kombianlage, welche aus einer Gasturbogruppe, im wesentlichen aus der Pos. 1a-12, 16, 53 bestehend, einem Abhitzedampferzeuger 14 und einem Dampfkreislauf besteht. Die Gasturbogruppe, die als autonome Einheit betrieben werden kann, besteht aus einer Verdichtereinheit, die weiter unten noch näher erläutert wird, einer der Verdichtereinheit nachgeschalteten ersten Brennkammer 4, einer dieser Brennkammer 4 nachgeschalteten ersten Turbine 7, einer dieser Turbine 7 nachgeschalteten zweiten Brennkammer 9 und einer dieser Brennkammer 9 nachgeschalteten zweiten Turbine 12. Die genannten Strömungsmaschinen 1, 7, 12 weisen eine einheitliche Rotorwelle 53 auf, welche durch eine nicht ersichtliche Kupplung mit einem Generator 16 gekoppelt ist. Diese Rotorwelle 53 ist vorzugsweise auf zwei nicht gezeigten Lagern gelagert, welche vorzugsweise kopfseitig der Verdichtereinheit und stromab der zweiten Turbine 12 angeordnet sind. Die Verdichtereinheit wird vorliegend, beispielsweise um die spezifische Leistung zu steigern, in zwei Teilverdichter 1a, 1b mit einem dazwischen geschalteten Zwischenkühler 37 unterteilt, wobei der erste Teilverdichter 1a mit einer Verdichterleitreiheverstellung 52 ausgestattet ist. Die angesaugte Luft 2 durchläuft einen Ansaugluftvorwärmer 34, bevor sie im ersten Verdichter 1a vorverdichtet wird. Anschliessend wird diese vorverdichtete Luft 2a durch den bereits genannten Zwischenkühler 37 geleitet, um dann als zwischengekühlte vorverdichtete Luft 2b in den zweiten Verdichter 1b zu strömen. Nach deren Endverdichtung strömt die verdichtete Luft 3 vorzugsweise in ein nicht gezeigtes Gehäuse, das in sich den Verdichteraustritt und die erste Turbine 7 einschliesst. In diesem Gehäuse ist auch die erste Brennkammer 4 untergebracht, welche vorzugsweise als zusammenhängende Ringbrennkammer ausgebildet ist und worin die verdichtete Luft 3 einströmt. Selbstverständlich kann die verdichtete Luft zum Betrieb der ersten Brennkammer 4 aus einer nicht gezeigten Luftspeicheranlage beigestellt werden. Die Ringbrennkammer 4 weist kopfseitig, auf den Umfang verteilt, eine Anzahl von nicht näher dargestellten Brennern auf, welche für die Verbrennung zuständig sind. Die Speisung mit Brennstoff 5 geschieht vorzugsweise über eine nicht dargestellte Ringleitung, wobei hier mindestens ein Regelorgan 5a vorgesehen ist. An sich können hier Diffusionsbrenner zum Einsatz gelangen. Im Sinne einer Reduzierung der Schadstoff-Emissionen, insbesondere was die NOx-Emissionen betrifft, und zur Steigerung des Wirkungsgrades ist es vorteilhaft, eine Anordnung von Vormischbrennern gemäss EP-0 321 809 B1 vorzusehen. Bezüglich Art der Zuführung und der Zusammensetzung der Verbrennungsluft gilt diese Ueberlegung auch für die zweite Brennkammer 9. Was die Anordnung dieser Vormischbrenner in Umfangsrichtung der Ringbrennkanner 4 betrifft, so kann eine solche bei Bedarf von der üblichen Konfiguration gleich grosser Brenner abweichen, stattdessen können unterschiedlich grosse Vormischbrenner gleicher oder unterschiedlicher Konfiguration zum Einsatz gelangen, dies vorzugsweise im Sinne einer Aufteilung zwischen Pilot- und Hauptbrennern. Selbstverständlich kann die Ringbrennkammer 4 aus einer Anzahl einzelner rohrförmiger Brennräume bestehen, welche allenfalls auch schrägringförmig, bisweilen auch schraubenförmig, um die Rotorwelle 53 angeordnet sind. Diese Ringbrennkammer 4, unabhängig von ihrer Auslegung, wird geometrisch so angeordnet, dass sie auf die Rotorlänge praktisch keinen Einfluss ausübt. Auf die daraus resultierenden Vorteile aus einer solchen Disposition, wird weiter unten näher eingegangen. Die Heissgase 6 aus dieser Ringbrennkammer 4 beaufschlagen die unmittelbar nachgeschaltete erste Turbine 7, deren kalorisch entspannende Wirkung auf die Heissgase 6 bewusst minimal gehalten wird, d.h. diese Turbine 7 wird demnach aus nicht mehr als ein bis zwei Laufschaufelreihen bestehen. Bei einer solchen Turbine 7 wird nötig sein, einen Druckausgleich an den Stirnflächen zwecks Stabilisierung des Axialschubes vorzusehen. Die in Turbine 7 teilentspannten heissen Abgase 8, welche unmittelbar in die zweite Brennkammer 9 strömen, weisen aus dargelegten Gründen eine recht hohe Temperatur auf, vorzugsweise ist sie betriebsspezifisch so auszulegen, dass sie sicher noch um 1000°C beträgt. Diese zweite Brennkammer 9 hat vorzugsweise die Form eines zusammenhängenden ringförmigen axialen oder quasi-axialen Zylinders; sie kann selbstverständlich auch aus einer Anzahl axial, quasi-axial oder schraubenförmig angeordneter und in sich abgeschlossener Brennräume bestehen. Was die Konfiguration der ringförmigen, aus einem einzigen Brennraum bestehenden Brennkammer 9 betrifft, so sind in Umfangsrichtung dieses ringförmigen Zylinders mehrere Brennstofflanzen 10 disponiert, wobei sie selbstverständlich auch über eine nicht gezeigte Ringleitung miteinander verbunden sein können. Auch diese Brennstoffzufuhr wird mindestens mit einem Regelorgan 10a versehen. Diese Brennkammer 9 weist an sich keinen Brenner im üblichen Sinn auf: Die Verbrennung des in die aus der Turbine 7 kommenden heissen Abgase 8 eingedüsten Brennstoffes 10 geschieht hier durch Selbstzündung, soweit freilich das Temperaturniveau eine solche Betriebsart zulässt. Ausgehend davon, dass die Brennkammer 9 mit einem gasförmigen Brennstoff, also beispielsweise Erdgas, betrieben wird, muss für eine Selbstzündung eine Temperatur der heissen Abgase 8 aus der Turbine 7 um die 1000°C vorherrschen, und dies selbstverständlich auch bei Teillastbetrieb, was für die Auslegung dieser Turbine 7 eine ursächliche Rolle spielt. Um die Betriebssicherheit und einen hohen Wirkungsgrad bei einer auf Selbstzündung ausgelegten Brennkammer zu gewährleisten, ist es eminent wichtig, dass die Flammenfront ortsmässig stabil bleibt. Zu diesem Zweck werden in dieser Brennkammer 9, vorzugsweise an der Innen- und Aussenwand, in Umfangsrichtung disponiert, eine Reihe von in der Figur nicht gezeigten Wirbel-Generatoren vorgesehen, welche in Strömungsrichtung vorzugsweise stromauf der Brennstofflanzen 10 angeordnet sind. Die Aufgabe dieser Wirbel-Generatoren besteht darin, Wirbel zu erzeugen, in welche dann der Brennstoff eingegeben wird, und welche dann weiter stromab eine stabilisierende Rückströmzone induzieren, analog derjenigen aus den Vormischbrennern in der Ringbrennkammer 4. Da es sich bei dieser Brennkammer 9, aufgrund der axialen Anordnung und ihrer Baulänge, um eine Hochgeschwindigkeitsbrennkammer handelt, deren mittlere Geschwindigkeit grösser ca. 60 m/s beträgt, müssen die wirbelerzeugenden Elemente, also die Wirbel-Generatoren, strömungskonform ausgebildet sein. Anströmungsseitig sollen diese vorzugsweise aus einer tetraederförmigen Form mit anströmungsschiefen Flächen bestehen. Die wirbelerzeugenden Elemente können, wie bereits erwähnt, entweder an der Aussenfläche oder an der Innenfläche der Brennkammer 9 plaziert sein, oder beiderorts wirken. Die schiefen Flächen zwischen den aussenliegenden und innenliegenden wirbelerzeugenden Elementen sind vorzugsweise spiegelbildlich angeordnet, dergestalt, dass der Durchflussquerschnitt in der Brennkammer 9 stromab dieses Ortes im Bereich der Eindüsung des Brennstoffes 10 eine Rückströmung erzeugende Erweiterung erfährt. Selbstverständlich können die wirbelerzeugenden Elemente auch axial zueinander verschoben sein. Die abströmungsseitige Fläche der wirbelerzeugenden Elemente ist im wesentlichen senkrecht auf die Innenwand gerichtet, so dass sich ab dort die angestrebte Rückströmzone einstellen kann. Hinsichtlich der spezifischen Ausgestaltung der Wirbel-Generatoren wird auf die Druckschrift EP-0 619 133 A1 verwiesen. Die Selbstzündung in der Brennkammer 9 muss indessen bei verschiedenen Brennstoffen auch in den transienten Lastbereichen sowie im Teillastbereich der Gasturbogruppe gesichert bleiben, d.h. es müssen Hilfsvorkehrungen vorgesehen werden, welche die Selbstzündung in der Brennkammer 9 auch dann sicherstellen, wenn sich allenfalls eine Flexion der Temperatur der heissen Abgase 8 im Bereich der Eindüsung des Brennstoffes 10 einstellen sollte. Um dies zu gewährleisten, kann dem Hauptbrennstoff eine kleine Menge eines anderen Brennstoffes mit einer niedrigeren Zündtemperatur beigegeben werden. Als "Hilfsbrennstoff" eignet sich hier beispielsweise Brennöl sehr gut. Der flüssige Hilfsbrennstoff, entsprechend eingedüst, erfüllt die Aufgabe, sozusagen als Zündschnur zu wirken, und löst auch dann eine Selbstzündung in der Brennkammer 9 aus, wenn die heissen Abgase 8 aus der ersten Turbine 7 eine Temperatur unterhalb des angestrebten optimalen Niveaus aufweisen sollten. Diese Vorkehrung, Brennöl zur Sicherstellung einer Selbstzündung vorzusehen, erweist sich freilich immer dann als besonders angebracht, wenn die Gasturbogruppe mit reduzierter Last betrieben wird. Diese Vorkehrung trägt des weiteren entscheidend dazu bei, dass die Brennkammer 9 eine minimale axiale Länge aufweisen kann. Die kurze Baulänge der Brennkammer 9, die Wirkung der gewürdigten Wirbel-Generatoren zur Gemischbildung sowie Flammenstabilisierung und die fortwährende Sicherstellung der Selbstzündung sind ursächlich dafür verantwortlich, dass die Verbrennung sehr rasch erfolgt, und die Verweilzeit des Brennstoffes im Bereich der heissen Flammenfront minimal bleibt. Eine unmittelbar verbrennungsspezifisch messbare Wirkung hieraus betrifft die NOx-Emissionen, welche dazu eine Minimierung erfahren, dergestalt, dass sie nunmehr kein Thema mehr bilden. Diese Ausgangslage ermöglicht ferner, den Ort der Verbrennung klar zu definieren, was sich auf eine optimierte Kühlung der Strukturen dieser Brennkammer 9 niederschlägt. Die in der Brennkammer 9 aufbereiteten Heissgase 11 beaufschlagen anschliessend eine nachgeschaltete zweite Turbine 12. Die thermodynamischen Kennwerte der Gasturbogruppe können so ausgelegt werden, dass die Abgase 13 aus der zweiten Turbine 12 noch soviel kalorisches Potential aufweisen, um damit einen nachgeschalteten Abhitzedampferzeuger 14 zu betreiben. Wie bereits bei der Beschreibung der Ringbrennkammer 4 hingewiesen wurde, ist diese geometrisch so angeordnet, dass sie auf die Rotorlänge praktisch keinen Einfluss ausübt. Des weiteren konnte festgestellt werden, dass die zweite Brennkammer 9 zwischen Abströmungsebene der ersten Turbine 7 und Anströmungsebene der zweiten Turbine 12 eine minimale Länge einnimmt. Da ferner die Entspannung der Heissgase 6 in der ersten Turbine 7, aus dargelegten Gründen, über wenige Laufschaufelreihen geschieht, lässt sich eine einwellige kompakte Gasturbogruppe bereitstellen. Es ist zur Steigerung des Wirkungsgrades der Gasturbogruppe von Vorteil, wenn vor der zweiten Brennkammer 9 ein in der Figur nicht ersichtlicher Kleindiffusor vorgesehen wird. Damit liesse sich der Totaldruckverlust im Gesamtsystem vermindern. Es lässt sich anhand der üblichen Diffusorauslegungsdiagramme beweisen, dass sich bereits bei einer minimalen Länge des Diffusors grosse Rückgewinnungsraten des dynamischen Druckes erreichen lassen. Wie oben dargelegt, können die Verdichterstufen 1a, 1b mit einer Zwischenkühlung ausgestattet sein. Um bei der Zugrundelegung einer solchen die geometrische Grundkonzeption der Gasturbogruppe, wie sie in der Figur dargestellt ist, nicht zu alterieren, kann der Zwischenkühler 37 in das Statorgehäuse integriert werden, vorzugsweise in unmittelbarer Strömungsrichtung der Verdichterstufen. Die Kühlung bei diesem Zwischenkühler 37 geschieht mittelbar oder unmittelbar. Bei unmittelbarer Zwischenkühlung kann dies beispielsweise durch ein Aggregat geschehen, dessen Betrieb auf Verdunstung des eingedüsten Wassers ausgelegt ist. Somit ergibt sich die Konfiguration, dass übliche Verbindungsleitungen zu einem ausserhalb des Statorgehäuses plazierten Zwischenkühler, und von diesem Zwischenkühler zurück durch das Statorgehäuse zur nächsten Verdichterstufe völlig entfallen.

Die Abgase 13 aus der zweiten Turbine 12 durchströmen, wie bereits dargelegt, den Abhitzedampferzeuger 14, und werden dann als Rauchgase 15 über einen Kamin abgeleitet. Der hier gezeigte Abhitzedampferzeuger 14 erzeugt einen Frischdampf 31. Selbstverständlich können auch Abhitzedampferzeuger vorgesehen werden, welche nach einem Mehrdrucksystem arbeiten und entsprechend mehrere Dampfqualitäten zur Verfügung stellen können.

Der im Abhitzedampferzeuger 14 produzierte Frischdampf 31 strömt über ein Regelorgan 32 in eine Dampfturbine 17, deren Welle auch mit dem bereits erwähnten Generator 16 gekoppelt ist. Der entspannte Dampf 18 aus der Dampfturbine 17 durchströmt dann einen Kondensator 19, der mit einem tauglichen Kühlmedium 20 betrieben wird. Der daraus entstehende Kondensat 21 wird nach Bedarf mit einem Zusatzwasser 22 ergänzt, wodurch weitgehend ein Kühlwasser 21a entsteht, das dann, durch eine Förderpumpe 23 gefördert, Richtung Zwischenkühler 37 des Verdichtersystems strömt, wobei eine erste Menge 24 dieses Kühlwassers 21a zunächst in einen Mischvorwärmer 26 geleitet wird. Der Rest wird dann über eine weitere Förderpumpe 25 in den genannten Zwischenkühler 37 geleitet. Ein Dampf 27 aus dem Mischvorwärmer 26 strömt über ein Regelorgan 28 in die Dampfturbine 17 und leistet dort Arbeit. Aus diesem Mischvorwärmer 26 wird auch Speisewasser 29 bereitgestellt, welches über eine Förderpumpe 30 in den Abhitzedampferzeuger 14 strömt, und dort im Wärmetauschverfahren zu Dampf 31 zur Beaufschlagung der Dampfturbine 17 umgewandelt wird. Durch die Kühlung der vorverdichteten Luft 2a im Zwischenkühler 37 entsteht aus dem Kühlwasser 21a durch entsprechende Mengeregulierung heisses Druckwasser 38, welches in einer durch Regelorgane 39, 42 ausgestatteten Ausdampfkaskade 40, 41, 43 teilweise in Dampf 48, 49 umgewandelt wird, der in die Dampfturbine 17 an geigneter Stelle eingeleitet wird. Eine dritte Ausdampfung zur genannten Kaskade geschieht stromab der zweiten Ausdampfflasche 43: eine Leitung 44 führt über ein Regelorgan 47 das verbliebene heisse Druckwasser in den Mischvorwärmer 26, wobei stromauf dieses Mischvorwärmers 26 eine Abzweigung 45 mit Regelorgan 46 eine Kühlwassermenge in die andere Kühlwasserleitung 21a führt. Die Dampfabführung aus dem genannten Mischvorwärmer 26 ist weiter oben bereits beschrieben worden. Aus der Dampfturbine 17 wird an druckmässig geeigneter Stelle eine Dampfmenge 33 entnommen, welche zur Vorwärmung der Ansaugluft 2 dient. Nach Durchlauf dieses Ansaugluftvorwärmers 34 wird das Kondensat 35 über ein Regelorgan 36 in die Kühlwasserleitung 21a geleitet. Eine zweite Dampfmenge 50 aus der Dampfturbine 17 wird über ein Regelorgan 51 stromauf der ersten Brennkammer 4 der Gasturbogruppe eingeleitet und nimmt an der Heissgasproduktion teil, wobei diese Dampfeinblasung die gefahrene Leistung der Kombianlage wesentlich erhöht, wie dies unter dem Kapitel "Darstellung der Erfindung" bereits näher dargelegt worden ist.

Die Regelung der Anlage geschieht mindestens über die folgenden anzusteuernden Regelorgane: Die Leistung- und Drehzahlregelung geschieht über eine Verdichterleitreiherveregelung A, eine Ansaugluftvorwärmung B bei Regelorgan 36 und eine Dampfeinblasung C in die Gasturbogruppe bei Regelorgan 51. Die dadurch ausgelösten thermodynamischen Veränderungen des Kreislaufes, wie jene von Massenstrom und Druckverhältnis, verlangen ihererseits eine Anpassung der Brennstoffmengen D und E, welche durch die Regelorgane 5a, 10a geschieht. Ausserdem werden für Leistungen unterhalb von ca. 50% der Nennleistung bei ausgesteuerten Verdichterleitreiheverstellung A und Ansaugluftvorwärmung B die Brennstoffzumessungen D und E als primäre Regelmethoden angesteuert. Zur Optimierung der aerodynamischen Verhältnisse der Teilverdichter 1a, 1b wird eine Kühlwasserzumessung F bei Regelorgan 25 stromauf des Zwischenkühlers 37 vorgenommen.

### Bezugszeichenliste

- 1a: Verdichterteil
- 1b: Verdichterteil
- 2: Angesaugte Luft
- 2a: Vorverdichtete Luft
- 2b: Zwischengekühlte vorverdichtete Luft
- 3: Verdichtete Luft
- 4: Erste Brennkammer
- 5: Brennstoff, Brennstoffzuführung zu 4
- 6: Heissgase der ersten Brennkammer 4
- 7: Erste Turbine
- 8: Heisse Abgase aus 7
- 9: Zweite Brennkammer
- 10: Brennstoff, Brennstoffzuführung zu 9
- 11: Heissgase der zweiten Brennkammer 9
- 12: Zweite Turbine
- 13: Abgase
- 14: Abhitzedampferzeuger
- 15: Rauchgase
- 16: Generator
- 17: Dampfturbine
- 18: Entspannter Dampf
- 19: Kondensator
- 20: Kühlmedium des Kondensators
- 21: Kondensat
- 21a: Kühlwasser
- 22: Zusatzwasser
- 23: Förderpumpe
- 24: Teilmenge Kühlwasser 21a
- 25: Förderpumpe
- 26: Mischvorwärmer
- 27: Dampf aus Mischvorwärmer
- 28: Regelorgan
- 29: Speisewasser aus 26
- 30: Speisewasserpumpe
- 31: Frischdampf
- 32: Regelorgan für 31
- 33: Dampfentnahme aus 17
- 34: Ansaugluftvorwärmer
- 35: Kondensat
- 36: Regelorgan
- 37: Zwischenkühler
- 38: Druckwasser
- 39: Regelorgan
- 40: Ausdampfflasche
- 41: Druckwasserleitung aus 40
- 42: Regelorgan
- 43: Ausdampfflasche
- 44: Druckwasserleitung aus 43
- 45: Kühlwasserbypass
- 46: Regelorgan
- 47: Regelorgan
- 48: Flashdampf
- 49: Flashdampf
- 50: Dampfentnahme aus 17
- 51: Regelorgan für 50
- 52: Leitreiheverstellung
- 53: Rotorwelle
- A: Verdichterleitreiheregelung
- B: Ansaugluftvorwärmung
- C: Dampfeinblasung
- D: Brennstoffzumessung für 4
- E: Brennstoffzumessung für 9
- F: Kühlwasserzumessung in 21a

## Patentansprüche

1. Verfahren zum Betrieb einer Kombianlage, welche Kombianlage eine Gasturbogruppe mit einer Verdichtereinheit (1a, 1b), wenigstens einer Brennkammer (4, 9), und wenigstens einer Turbine (7,12) umfasst, welche Kombianlage weiterhin einen Abhitzedampferzeuger (14) und einen Dampfkreislauf mit wenigstens einer Dampfturbine (17), sowie einen Generator (16) umfasst,
welches Verfahren die folgenden Schritte zum Erzeugen einer Leistung umfasst
- Erzeugen einer verdichteten Luft (3) in dem Verdichter;
- Zuführen eines Brennstoffs (5) zu der verdichteten Luft;
- Verbrennen des Brennstoffs, und damit Erzeugen eines Heissgases (6) ohne Dampfzufuhr, aufweisend eine Heissgastemperatur;
- Entspannen des Heissgases in wenigstens einer Turbine (7, 12);
- Durchströmen des Abhitzedampferzeugers mit dem entspannten Heissgas (13);
- Erzeugen eines Frischdampfmassenstroms (31) in dem Abhitzedampferzeuger (14);
- Zuführen des gesamten Frischdampfmassenstroms (31) zu einer Dampfturbine (17);
- Entspannen des Dampfes in der Dampfturbine;
umfassend die folgenden Schritte zum Erhöhen der erzeugten Leistung:
- Entnahme mindestens einer bestimmten Menge teilentspannten Dampfes (50) an druckmässig geeigneter Stelle aus der Dampfturbine über ein Regelorgan (51 );
- Einleiten der entnommenen Dampfmenge in die Gasturbogruppe;
- die Dampfmenge stromauf der Brennkammer oder in den Brennstoff einzubringen;
- in die Brennkammer (4,9) eine zusätzliche Brennstoffmenge (5,10) einzubringen.
- die zusätzliche Brennstoffmenge so zu bemessen, dass der zusätzlich eingebrachte Dampf auf das Temperaturniveau des Heissgases ohne Dampfzufuhr gebracht wird,
- die Dampfproduktion im Abhitzedampferzeuger zu erhöhen, und
- im Wesentlichen die gesamte zusätzlich erzeugte Dampfmenge vollständig in der Dampfturbine zu entspannen.

2. Verfahren nach Anspruch 1, **dadurch gekennzeichnet, dass** das Einbringen des entnommenen Dampfes unmittelbar erfolgt.

3. Verfahren nach einem der vorstehenden Ansprüche, **dadurch gekennzeichnet, dass** die Dampfmenge (50) stromab der Verdichtereinheit (1a, 1b) in die Gasturbogruppe eingebracht wird.

4. Verfahren nach einem der vorstehenden Ansprüche, **dadurch gekennzeichnet, dass** die Gasturbogruppe mit einer sequentiellen Befeuerung betrieben wird.

5. Verfahren nach Anspruch 4, **dadurch gekennzeichnet, dass** der Dampf stromauf einer ersten Brennkammer (4) oder in den Brennstoff (5) einer ersten Brennkammer eingeleitet wird.

6. Verfahren nach einem der Ansprüche 4 oder 5, **dadurch gekennzeichnet, dass** bei Dampfeinblasung auf die Zumessung (E) von Brennstoff (10) zu wenigstens einer zweiten Brennkammer (9) eingewirkt wird.

7. Verfahren nach einem der vorstehenden Ansprüche, **dadurch gekennzeichnet, dass** der in der Dampfturbine (17) entspannte Dampf (98) in einem Kondensator (19) verflüssigt wird.

8. Verfahren nach Anspruch 7, **dadurch gekennzeichnet, dass** das entspehende Kondensat (29) wenigstens teilweise von einer Pumpe (30) gefördert und dem Abhitzedampferzeuger (14) als Speisewasser zugeführt wird.

## Claims

1. Method for operation of a combined-cycle plant, which combined-cycle plant comprises a gas-turbine group with a compressor unit (1a, 1b), for example a combustion chamber (4, 9) and at least one turbine (7, 12), which combined-cycle plant also comprises a waste-heat steam generator (14) and a steam circuit with at least one turbine (17), as well as a generator (16), which method comprises the following steps for generation of power
- generation of compressed air (3) in the compressor;
- supply of a fuel (5) to the compressed air;
- combustion of the fuel, and thus generation of a hot gas (6) without any steam supply, at a hot-gas temperature;
- expansion of the hot gas in at least one turbine (7, 12);
- the expanded hot gas (13) flows through the waste-heat steam generator;
- generation of a fresh steam mass flow (31) in the waste-heat steam generator (14);
- supply of the entire fresh steam mass flow (31) to a steam turbine (17);
- expansion of the steam in the steam turbine;
comprising the following steps in order to increase the power that is generated:
- removal of at least a specific amount of partially expanded steam (50) at a point which is suitable on the basis of pressure conditions from the steam turbine via a control member (51);
- introduction of the removed amount of steam into the gas-turbine group;
- introduction of the amount of steam upstream of the combustion chamber or into the fuel;
- introduction of an additional amount of fuel (5, 10) into the combustion chamber (4, 9);
- the amount of additional fuel is metered such that the additionally introduced steam is raised to the temperature level of the hot gas without any supply of steam,
- increase in the steam production in the waste-heat steam generator, and
- complete expansion of essentially all of the additionally generated amount of steam in the steam turbine.

2. Method according to Claim 1, **characterized in that** the steam which is drawn off is introduced directly.

3. Method according to any of the preceding claims, **characterized in that** the steam quantity (50) is introduced into the gas-turbine group downstream of the compressor unit (1a, 1b).

4. Method according to any of the preceding claims, **characterized in that** the gas-turbine group is operated by means of sequential firing.

5. Method according to Claim 4, **characterized in that** the steam is introduced upstream of a first combustion chamber (4) or into the fuel (5) for a first combustion chamber.

6. Method according to one of Claims 4 or 5, **characterized in that**, when steam is blown in, this acts on the metering (E) of fuel (10) to at least one second combustion chamber (9).

7. Method according to one of the preceding claims, **characterized in that** the steam (18) which is expanded in the steam turbine (17) is liquefied in a condenser (19).

8. Method according to Claim 7, **characterized in that** at least some of the respective condensate (29) is conveyed by a pump (30) and is supplied to the waste-heat steam generator (14) as feedwater.

## Revendications

1. Procédé d'exploitation d'une installation combinée, laquelle installation combinée comprend un groupe à turbines à gaz doté d'une unité de compression (1a, 1b), d'au moins une chambre de combustion (4, 9) et d'au moins une turbine (7, 12), laquelle installation combinée comprend en outre un générateur de vapeur de chauffe (14) et un circuit de vapeur doté d'au moins une turbine à vapeur (17), ainsi qu'un générateur (16),
lequel procédé englobe les étapes suivantes pour la génération d'une puissance :
- génération d'un air comprimé (3) dans le compresseur ;
- acheminement d'un carburant (5) vers l'air comprimé ;
- combustion du carburant et ainsi génération, sans alimentation en vapeur, d'un gaz chaud (6) présentant une température de gaz chaud ;
- détente du gaz chaud dans au moins une turbine (7, 12) ;
- passage du gaz chaud détendu (13) à travers le générateur de vapeur de chauffe ;
- génération d'un débit massique de vapeur fraîche (31) dans le générateur de vapeur de chauffe (14) ;
- acheminement de la totalité du débit massique de vapeur fraîche (31) vers une turbine à vapeur (17) ;
- détente de la vapeur dans la turbine à vapeur ;
englobant les étapes suivantes pour l'augmentation de la puissance générée :
- prélèvement d'au moins une certaine quantité de vapeur partiellement détendue (50) à un endroit approprié du point de vue de la pression hors de la turbine à gaz par le biais d'un organe de réglage (51) ;
- introduction de la quantité de vapeur prélevée dans le groupe à turbines à gaz ;
- introduction de la quantité de vapeur en amont de la chambre de combustion ou dans le carburant ;
- introduction d'une quantité supplémentaire de carburant (5, 10) dans la chambre de combustion (4, 9) ;
- dosage de la quantité de carburant supplémentaire de manière à amener la vapeur introduite en supplément au niveau de température du gaz chaud sans alimentation en vapeur ;
- augmentation de la production de vapeur dans le générateur de vapeur de chauffe et
- détente intégrale de substantiellement la totalité de la quantité de vapeur générée en supplément dans la turbine à vapeur.

2. Procédé selon la revendication 1, **caractérisé en ce que** l'introduction de la vapeur prélevée a lieu directement.

3. Procédé selon l'une quelconque des revendications précédentes, **caractérisé en ce que** la quantité de vapeur (50) est introduite dans le groupe à turbines à gaz en aval de l'unité de compression (1a, 1b).

4. Procédé selon l'une quelconque des revendications précédentes, **caractérisé en ce que** le groupe à turbines à gaz fonctionne avec un allumage séquentiel.

5. Procédé selon la revendication 4, **caractérisé en ce que** la vapeur est introduite en amont d'une première chambre de combustion (4) ou dans le carburant (5) d'une première chambre de combustion.

6. Procédé selon l'une quelconque des revendications 4 ou 5, **caractérisé en ce que**, lors du soufflage de vapeur, on agit sur le dosage (E) de carburant (10) destiné à au moins une deuxième chambre de combustion (9).

7. Procédé selon l'une quelconque des revendications précédentes, **caractérisé en ce que** la vapeur (18) détendue dans la turbine à vapeur (17) est liquéfiée dans un condensateur (19).

8. Procédé selon la revendication 7, **caractérisé en ce que** le condensé apparaissant (29) est convoyé au moins partiellement par une pompe (30) et acheminé comme eau d'alimentation au générateur de vapeur de chauffe (14).
